# EUROPÄISCHE PATENTSCHRIFT

(11) **EP 1 776 402 B1**
(45) Veröffentlichungstag und Bekanntmachung des Hinweises auf die Patenterteilung: **14.11.2007**
(21) Anmeldenummer: 05754116.1
(22) Anmeldetag: 21.06.2005
(51) Int. Cl.: C08G 6/02, C08L 61/02, C09D 4/06, C08F 283/00, C08L 61/14

(54) **ZINNFREIE, HOCHSCHMELZENDE REAKTIONSPRODUKTE AUS CARBONYLHYDRIERTEN KETON-ALDEHYDHARZEN, HYDRIERTEN KETONHARZEN SOWIE CARBONYL- UND KERNHYDRIERTEN KETON-ALDEHYDHARZEN AUF BASIS VON AROMATISCHEN KETONEN UND POLYISOCYANATEN**
TIN-FREE, HIGH-MELTING REACTION PRODUCTS OF CARBONYL-HYDROGENATED KETONE ALDEHYDE RESINS, HYDROGENATED KETONE RESINS, AND CARBONYL-HYDROGENATED AND CORE-HYDROGENATED KETONE ALDEHYDE RESINS BASED ON AROMATIC KETONES AND POLYISOCYANATES
PRODUITS DE REACTION EXEMPTS D'ETAIN A POINT DE FUSION ELEVE, CONSTITUES DE RESINES DE CETONE-ALDEHYDE CARBONYLE-HYDROGENEES, DE RESINES DE CETONE HYDROGENEES ET DE RESINES DE CETONE-ALDEHYDE CARBONYLE-HYDROGENEES ET A NOYAU HYDROGENE A BASE DE CETONES ET DE POLYISOCYANATES AROMATIQUES

(30) Priorität: 12.08.2004 DE 102004039083
(43) Veröffentlichungstag der Anmeldung: 25.04.2007
(73) Patentinhaber: Evonik Degussa GmbH, 40474 Düsseldorf (DE)
(72) Erfinder: GLÖCKNER, Patrick, 45721 Haltern am See (DE); WENNING, Andreas, 48301 Nottuln (DE); DENKINGER, Peter, 48301 Nottuln (DE); EWALD, Michael, 45768 Marl (DE)
(86) Internationale Anmeldenummer: PCT/EP2005/052872
(87) Internationale Veröffentlichungsnummer: WO 2006/018341

(56) Entgegenhaltungen:
- EP-A- 1 361 236
- EP-A- 1 508 582
- US-A- 4 731 434

## Beschreibung

Die Erfindung betrifft zinnfreie Reaktionsprodukte von hydroxygruppenhaltigen, carbonylhydrierten Keton- und Keton-Aldehydharzen sowie hydrierten Keton-Aldehydharzen auf Basis von aromatischen Ketonen und Polyisocyanaten, ein Verfahren zu ihrer Herstellung und deren Verwendung, insbesondere in Beschichtungsstoffen und Klebstoffen.

Keton-Aldehydharze werden in Beschichtungsstoffen z. B. als filmbildende Zusatzkomponente eingesetzt, um bestimmte Eigenschaften wie Antrocknungsgeschwindigkeit, Glanz, Härte oder Kratzfestigkeit zu verbessern. Üblicherweise verfügen Keton-Aldehydharze über Hydroxygruppen und können daher z. B. mit Polyisocyanaten oder Aminharzen vernetzt werden. In physikalisch oder oxidativ trocknenden Lack- oder Klebsystemen findet dagegen kein Polymeraufbau durch Vernetzung dieser Harze statt. Derartige Beschichtungen besitzen daher oft wegen der unvernetzten und daher relativ niedrigmolekularen Anteile eine geringe Widerstandsfähigkeit gegenüber z. B. Benzin, Chemikalien oder Lösemitteln.

Die oben erwähnten Nachteile können verbessert werden, wenn das Molekulargewicht der Keton-Aldehydharze erhöht wird. Durch die Erhöhung des Molekulargewichtes steigen der Schmelz- bzw. der Erweichungsbereich signifikant an, was zwar bzgl. Antrocknungsgeschwindigkeit und oben erwähnter Widerstandsfähigkeit von Beschichtungsstoffen oder Klebstoffen positiv ist, sich jedoch auf die Herstellung hochwertiger Produkte, z. B. Farbzahl der Harze, negativ auswirken kann. Darüber hinaus werden die guten Löslichkeitseigenschaften und rheologischen Eigenschaften der Harze negativ beeinflusst.

Zusätzlich unterliegen die Carbonylgruppen durch z. B. Bestrahlung klassischen Abbaureaktionen wie z. B. vom Norrish-Typ I oder II [Laue, Plagens, Namen und Schlagwort-Reaktionen der organischen Chemie, Teubner Studienbücher, Stuttgart, 1995].
Die Verwendung nicht modifizierter Keton-Aldehyd- oder Ketonharze ist daher für qualitativ hochwertige Anwendungen z. B. im Außenbereich, bei dem hohe Beständigkeitseigenschaften insbesondere gegenüber Bewitterung und Hitze erforderlich sind, nicht möglich. Ähnlich unbefriedigende Bewitterungseigenschaften besitzen Phenolharze des Novolaktyps oder Naturharze.

Die Umwandlung der Carbonylgruppen in sekundäre Alkohole durch Hydrierung von Keton-Aldehydharzen wird seit langem praktiziert (DE 8 70 022, DE 32 41 735, JP 11012338). Ein typisches und bekanntes Produkt ist Kunstharz SK der Degussa AG. Die Verwendung carbonyl- und kernhydrierter Keton-Aldehydharze auf Basis von Ketonen, die aromatische Gruppen enthalten, ist ebenfalls möglich. Ein solches Harz wird in DE 33 34 631 beschrieben. Die OH-Zahl derartiger Produkte ist mit über 200 mg KOH/g sehr hoch.

Die Reaktion zwischen Isocyanatgruppen und Hydroxygruppen wird üblicherweise unter Verwendung von Katalysatoren beschleunigt. Aufgrund vieler Vorteile wie z. B. Kinetik der Reaktion oder Stabilität des Katalysatorsystems auch bei langer thermischer Belastung haben sich zinnorganische Verbindungen wie z. B. Dibutylzinndilaurat etabliert. Die Industrie ist jedoch angehalten, diese Katalysatoren aus ökologischen und toxikologischen Gründen zu substituieren.

WO 03/091307 (EP 1 361 236) beschreibt die Herstellung und Verwendung von Polyurethan-Harzen, die das Reaktionsprodukt aus mindestens einem Diisocyanat und einer Gruppe von Komponenten mit Isocyanat-reaktiven Gruppen sind, wobei diese Gruppe aus
a) einer 1. Gruppe eines oder mehrerer Polyetherpolyole
b) einer 2. Gruppe eines oder mehrerer polyhydroxilierter Harze, ausgewählt aus der Gruppe harter Ketonharze, Polyesterharze, Acryl-Styrol-Copolymeren, Polyacrylaten, Kolophoniumderivaten und Terpen-Phenolharzen
c) optionell einer 3. Gruppe eines oder mehrerer Polyole mit einem Molekulargewicht ≤ 800 g/mol, und
d) mindestens einem Amin und einem Reaktionsabbrecher,
wobei das Verhältnis der Äquivalentgewichte der Diisocyanatkomponenten und der Komponenten, die isocyanatreaktive Gruppen besitzen, so gewählt wird, dass im Wesentlichen alle Isocyanatgruppen der Diisocyanate vorliegen als Reaktionsprodukt mit einer der genannten isocyanatreaktiven funktionellen Gruppe, besteht

Die der vorliegenden Erfindung zugrunde liegenden Reaktionsprodukte enthalten keine Polyether, Amine sowie keine Kettenabbrecher. Auch ist die Reaktionsführung eine andere. Demzufolge sind die dort erhaltenen Produkte nicht mit den Produkten der vorliegenden Erfindung zu vergleichen. Da offensichtlich Dibutylzinndilaurat als Katalysator verwendet wird, ist zudem von einem ökologischen und toxikologischen Risiko auszugehen.

EP 1 229 090 beschreibt ähnliche Polymere wie WO 03/091307, so dass die gleichen Argumente wie dort gelten. Zusätzlich verwendet diese Veröffentlichung keine carbonylhydrierten Keton-Aldehydharz und/oder carbonylhydrierten Ketonharz und / oder carbonylhydrierten und kernhydrierten Keton-Aldehydharz auf Basis von aromatischen Ketonen.

EP 107 097 beschreibt Schmelzklebstoffe, bestehend aus einem Gemisch enthaltend prepolymeres Isocyanat, ein thermoplastisches Polymer und ein niedrigmolekulares Kunstharz, dadurch gekennzeichnet, dass das Gemisch folgende Komponenten enthält:
a) 20 bis 90 Gew.-% prepolymeres Isocyanat
b) 0 bis 75 Gew.-% eines thermoplastischen Polyurethans
c) 0 bis 50 % eines niedrigmolekularen Kunstharzes aus der Gruppe der Ketonharze und/oder Keton-Aldehyd-Kondensationsharze und/oder Hydrierungsprodukte von Acetophenon-Kondensationshanen.

Im Gegensatz zu den in EP 107 097 verwendeten Produkten, wird in der vorliegenden Erfindung kein thermoplastisches Polyurethan verwendet. Außerdem werden hydrierte Harze verwendet, insbesondere carbonylhydrierte Keton-Aldehydharze und/oder carbonylhydrierte Ketonharze und/oder carbonylhydrierte und kernhydrierte Keton-Aldehydharze auf Basis von aromatischen Ketonen. Hydrierte Aldol-Homokondensate von Acetophenon wie in EP 107 097 beschrieben werden explizit nicht beansprucht.

DE 34 16 378 beschreibt Trennschicht-Überzugsmischungen unter Verwendung nichthydrierter Keton-Aldehydharze, insbesondere Cyclohexanon-Formaldehydharze als Hauptkomponente.

Hochschmelzende Harze auf Basis von hydrierten Keton-Aldehydharzen und Di- und / oder Polyisocyanaten für strahlungshärtende Lacke werden beschrieben in DE 102004 020 740. Neben der Tatsache, dass hier strahlungsreaktive Lösemittel verwendet werden, die den Einsatzbereich einschränken und den Einsatz in nicht strahlenhärtenden Anwendungen verbieten, werden zudem zinnhaltige Katalysatoren verwendet.

Aufgabe der vorliegenden Erfindung war es, zinnfreie, verseifungsstabile Reaktionsprodukte zu finden, welche die Antrocknungsgeschwindigkeit, die Härte, den Glanz und die Lösemittelsowie Chemikalienbeständigkeit und Haftung von Beschichtungsstoffsystemen und Klebstoffen verbessern. Die Produkte sollen eine gute thermische Beständigkeit und Bewitterungsstabilität besitzen. Darüber hinaus sollte die Herstellung aus wirtschaftlichem Interesse in einem optimierten Zeitrahmen durchführbar sein.

Überraschender Weise konnte diese Aufgabe gelöst werden, indem in Heschichtungsstoffen oder Klebstoffen Reaktionsprodukte verwendet werden, die aus den Umsetzungsprodukten von hydrierten Ketonharzen, carbonylhydrierten Keton-Aldehydharzen und/oder kern- und carbonylhydrierten Keton-Aldehydharzen auf Basis von aromatischen Ketonen (Arylalkylketonen) und Di- oder Polyisocyanaten mit einem Schmelzbereich oberhalb von 140 °C bestehen, und zinnfrei sind. Explizit ausgenommen sind hierbei Homo-Aldolkondensationsprodukte (Ketonharze) des Acetophenons.
Diese üblicherweise mit zinnorganischen Verbindungen katalysierte Reaktion konnte überraschender Weise durch die Anwesenheit anderer, zinnfreier Verbindungen katalysiert werden und führt insbesondere bei Verwendung von Bismuthorganylen bei ähnlichen Reaktionsgeschwindigkeiten zu Produkten gleicher Qualitätsgüte.

Die erfindungsgemäßen zinnfreien Reaktionsprodukte sind außerdem verseifungsstabil und widerstandsfähig gegen Chemikalien und besitzen eine hohe Vergilbungsbeständigkeit. Die Reaktionsprodukte erzeugen in Beschichtungsstoffen oder Klebstoffen einen hohen Glanz, eine gute Antrocknungsgeschwindigkeit und Haftung zu unterschiedlichen Untergründen wie z. B. Metallen, Kunststoffen wie z. B. Polyethylen, Polypropylen oder Polycarbonat bei gleichzeitig hoher Härte.

Gegenstand der Erfindung sind zinnfreie, hochschmelzende Reaktionsprodukte, im Wesentlichen enthaltend
das Umsetzungsprodukt mit einem Schmelzbereich oberhalb von 140 °C von
A) mindestens einem carbonylhydrierten Keton-Aldehydharz und/oder hydrierten Ketonharz und / oder carbonylhydrierten und kernhydrierten Keton-Aldehydharz auf Basis von aromatischen Ketonen mit
B) mindestens einem aromatischen, aliphatischen und/oder cycloaliphatischen Di- oder Polyisocyanat.

Explizit ausgenommen sind Homo-Aldolkondensationsprodukte (Ketonharze) des Acetophenons.

Gegenstand der Erfindung ist auch ein Reaktionsprodukt, wobei Mischungen aus den Polymeren C) und der Komponente A) polymeranalog mit Komponente B) umgesetzt werden.

Gegenstand der Erfindung ist auch die Verwendung von Reaktionsprodukten, im Wesentlichen enthaltend
das Umsetzungsprodukt mit einem Schmelzbereich oberhalb von 140 °C von
A) mindestens einem carbonylhydrierten Keton-Aldehydharz und/oder hydrierten Ketonharz und/oder einem carbonylhydrierten und kernhydrierten Keton-Aldehydharz auf Basis von aromatischen Ketonen
   mit
B) mindestens einem aromatischen, aliphatischen und/oder cycloaliphatischen Di- oder Polyisocyanat
   als Hauptkomponente, Basiskomponente oder Zusatzkomponente in Beschichtungsstoffen, Klebstoffen, Druckfarben und Tinten, Polituren, Lasuren, Pigmentpasten, Spachtelmassen, Kosmetikartikeln und/oder Dicht- und Dämmstoffen, insbesondere zur Verbesserung von Antrocknungsgeschwindigkeit, Haftungseigenschaften, Glanz, Lösemittel- und Chemikalienbeständigkeit sowie der Härte.

Als Ketone zur Herstellung der hydrierten Keton- und carbonylhydrierten Keton-Aldehydharze (Komponente A)) eignen sich alle Ketone, insbesondere Aceton, Acetophenon, kernsubstituierte Acetophenonderivate, wie Hydroxy-, Methyl-, Ethyl-, tert.-Butyl-, Cyclohexyl-Acetophenon, 4-tert.-Butylmethylketon, Methylethylketon, Heptanon-2, Pentanon-3, Methylisobutylketon, Propiophenon, Methylnaphthylketon, Cyclopentanon, Cyclododecanon, Mischungen aus 2,2,4- und 2,4,4-Trimethylcyclopentanon, Cycloheptanon und Cyclooctanon, Cyclohexanon und alle alkylsubstituierten Cyclohexanone mit einem oder mehreren Alkylresten, die insgesamt 1 bis 8 Kohlenstoffatome aufweisen, einzeln oder in Mischung. Als Beispiele alkylsubstituierter Cyclohexanone können 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon genannt werden.

Im Allgemeinen können aber alle in der Literatur für Keton- und Keton-Aldehydharzsynthesen als geeignet genannte Ketone, in der Regel alle C-H-aciden Ketone, eingesetzt werden.

Bevorzugt werden hydrierte Ketonharze auf Basis der Ketone 4-tert.-Butylmethylketon, Cyclohexanon, 4-tert.-Butylcyclohexanon, 3,3,5-Trimethylcyclohexanon und Heptanon allein oder in Mischung, nicht jedoch auf Basis von Acetophenon.

Bevorzugt werden carbonylhydrierte Keton-Aldehydharze auf Basis der Ketone Acetophenon, 4-tert.-Butylmethylketon, Cyclohexanon, 4-tert.-Butylcyclohexanon, 3,3,5-Trimethylcyclohexanon und Heptanon allein oder in Mischung.

Als Aldehyd-Komponente der carbonylhydrierten Keton-Aldehydharze (Komponente A)) eignen sich prinzipiell unverzeigte oder verzweigte Aldehyde, wie z. B. Formaldehyd, Acetaldehyd, n-Butyraldehyd und/oder iso-Butyraldehyd, Valerianaldehyd sowie Dodecanal. Im Allgemeinen können alle in der Literatur für Keton-Aldehydharzsynthesen als geeignet genannte Aldehyde eingesetzt werden. Bevorzugt wird jedoch Formaldehyd allein oder in Mischungen verwendet.

Das benötigte Formaldehyd wird üblicherweise als ca. 20 bis 40 Gew.%ige wässrige oder alkoholische (z. B. Methanol oder Butanol) Lösung eingesetzt. Andere Einsatzformen des Formaldehyds wie z. B. auch die Verwendung von para-Formaldehyd oder Trioxan sind ebenfalls möglich. Aromatische Aldehyde, wie z. B. Benzaldehyd, können in Mischung mit Formaldehyd ebenfalls enthalten sein.

Besonders bevorzugt für die carbonylhydrierten Keton-Aldehydharze der Komponente A) werden als Ausgangsverbindungen aus Acetophenon, 4-tert.-Butylmethylketon, Cyclohexanon, 4-tert.-Butylcyclohexanon, 3,3,5-Trimethylcyclohexanon sowie Heptanon allein oder in Mischung und Formaldehyd eingesetzt.
Im untergeordneten Maße können nicht hydrierte Keton-Aldehydharze verwendet werden, die dann aber geringere Lichtechtheiten besitzen.

Die Harze aus Keton bzw. aus Keton und Aldehyd werden in Gegenwart eines Katalysators mit Wasserstoff bei Drücken von bis zu 300 bar hydriert. Dabei wird die Carbonylgruppe des Ketonharzes bzw. Keton-Aldehydharzes in eine sekundäre Hydroxygruppe umgewandelt. Je nach Reaktionsbedingungen kann ein Teil der Hydroxygruppen abgespalten werden, so dass Methylengruppen resultieren. Weitere Gruppierungen wie z. B. ggf. vorhandene Doppelbindungen lassen sich auf diese Weise ebenfalls hydrieren.
Zur Veranschaulichung dient folgendes Schema:

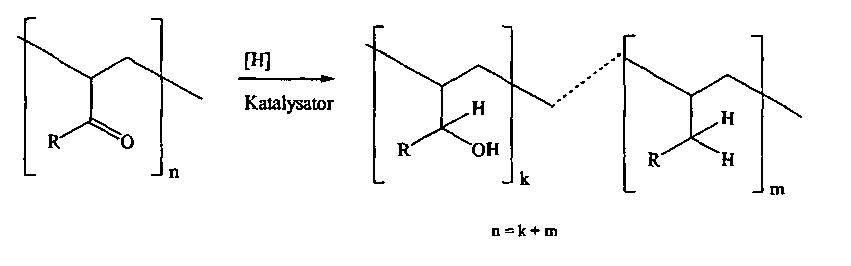

Als Ketone zur Herstellung der carbonyl- und kernhydrierten Keton-Aldehydhane (Komponente A)) eignen sich alle Ketone, die neben C-H-aciden Protonen über aromatische Gruppierungen verfügen, insbesondere Arylalkylketone wie z. B. Methylnaphthylketon, Acetophenon und/oder dessen Derivate wie z. B. kernsubstituierte Acetophenonderivate, wie Hydroxy-, Methyl-, Ethyl-, tert.-Butyl-, Cyclohexyl-Acetophenon.

Durch die Wahl der Hydrierbedingungen können auch die Hydroxygruppen hydriert werden, so dass cycloaliphatische Ringe entstehen. Die kernhydrierten Harze besitzen OH-Zahlen von 50 bis 450 mg KOH/g, bevorzugt 100 bis 350 mg KOH/g, besonders bevorzugt von 150 bis 300 mg KOH/g. Der Anteil an aromatischen Gruppen liegt unter 50 Gew.-%, bevorzugt unter 30 Gew.-%, besonders bevorzugt unter 10 Gew.-%. Ein Verfahren ist in DE 33 34 631 beschrieben.

Als Komponente B) geeignet sind aromatische, aliphatische und/oder cycloaliphatische Di- und/oder Polyisocyanate.
Beispiele für Diisocyanate sind Cyclohexandiisocyanat, Methylcyclohexandiisocyanat, Ethylcyclohexandiisocyanat, Phenylendiisocyanat, Propylcyclohexandiisocyanat, Methyldiethylcyclohexandiisocyanat, Toluylendiisocyanat, Bis(isocyanatophenyl)methan, Propandiisocyanat, Butandiisocyanat, Pentandiisocyanat, Hexandiisocyanat, wie Hexamethylendiisocyanat (HDI) oder 1,5-Diisocyanato-2-methylpentan (MPDI), Heptandiisocyanat, Octandiisocyanat, Nonandiisocyanat, wie 1,6-Diisocyanato-2,4,4-trimethylhexan oder 1,6-Diisocyanato-2,2,4-trimethylhexan (TMDI), Nonantriisocyanat, wie 4-Isocyanatomethyl-1,8-octandiisocyanat (TIN), Dekandi- und -triisocyanat, Undekandi- und - triisocyanat, Dodecandi- und -triisocyanate, Isophorondiisocyanat (IPDI), Bis(isocyanatomethylcyclohexyl)methan (H₁₂MDI), Isocyanatomethylmethylcyclohexylisocyanat, 2,5(2,6)-Bis(isocyanato-methyl)bicyclo[2.2.1]heptan (NBDI), 1,3-Bis(isocyanatomethyl)cyclohexan (1,3-H₆-XDI) oder 1,4-Bis(isocyanatomethyl)cyclohexan (1,4-H₆-XDI), allein oder in Mischung.

Eine andere bevorzugte Klasse von Polyisocyanaten als Komponente B) sind die durch Dimerisierung, Trimerisierung, Allophanatisierung, Biuretisierung und/oder Urethanisierung der einfachen Diisocyanate hergestellten Verbindungen mit mehr als zwei Isocyanatgruppen pro Molekül, beispielsweise die Umsetzungsprodukte dieser einfachen Diisocyanate, wie z. B. IPDI, TMDI, HDI und/oder H₁₂MDI mit mehrwertigen Alkoholen (z. B. Glycerin, Trimethylolpropan, Pentaerythrit) bzw. mehrwertigen Polyaminen, oder die Triisocyanurate, die durch Trimerisierung der einfachen Diisocyanate, wie beispielsweise IPDI, HDI und H₁₂MDI, erhältlich sind.

Es ist auch möglich, einen Teil der Komponente A) durch weitere hydroxyfunktionelle Polymere C) wie z. B. nicht hydrierte und/oder kernhydrierte Phenol-Aldehydharze, hydroxyfunktionelle, nicht hydrierte Keton-Aldehydharze, hydroxyfunktionelle Polyester und/oder Polyacrylate zu ersetzen. Dabei können direkt Mischungen dieser Polymere C) mit der Komponente A) polymeranalog mit Komponente B) umgesetzt werden. Im Gegensatz zu den "reinen" Harzen der Komponente A) können hierdurch Eigenschaften, wie z. B. Flexibilität, Härte noch besser eingestellt werden. Die weiteren hydroxyfunktionellen Polymere besitzen in der Regel Molekulargewichte Mn zwischen 200 und 10 000 g/mol, bevorzugt zwischen 300 und 5 000 g/mol.

Zur Beschleunigung der Reaktion zur Herstellung der Harze aus A) und B) und ggf. C) wird ein zinnfreier Katalysator eingesetzt. Prinzipiell sind alle zinnfreien Verbindungen geeignet, die eine OH-NCO-Reaktion beschleunigen.
Katalysatoren, auf Basis der Metalle Bismuth, Zirkonium, Eisen oder Aluminium sind besonders gut geeignet, wie z. B. Carboxylate, Chelate und Komplexe.

Gleiches gilt für rein organische Katalysatoren wie z. B. tert. Amine beispielsweise 1,4-Diazabicylo[2.2.2]octan (DABCO), 1,8-Diazabicyclo[5.4.0]undec-7-en (DBU), N,N-Dimethylcyclohexylamin (DMCA) oder 1,5-Diazabicyclo[2.3.0]non-5-en (DBN).

Überraschender Weise hat sich gezeigt, dass Katalysatoren, die Bismuth enthalten, die Reaktion ganz besonders beschleunigen, ohne dass weitere Eigenschaften, wie z. B. rheologisches Verhalten verändert werden. Die Katalysatoren verbleiben nach beendeter Reaktion im Reaktionsprodukt und können ggf. in geeigneter Weise stabilisiert werden. Als besonders wirksam hat sich die Stabilisation mittels Mono- oder Dicarbonsäuren erwiesen. Es ist aber auch möglich, alle in der Literatur zur Stabilisierung von Metallen als geeignet genannten Verbindungen einzusetzen.

Der Schmelzbereich des zinnfrei hergestellten Umsetzungsproduktes aus A) und B) und ggf. C) liegt oberhalb von 140 °C, bevorzugt oberhalb von 145 °C, besonders bevorzugt oberhalb von 150 °C.

Die Mengen von A) und B) und gegebenenfalls C) werden so gewählt, dass 1 mol des Harzes (Komponente A)) bzw. 1 mol des Gemisches aus A) und C) bezogen auf Mₙ, und 0,2 bis 15 mol, bevorzugt 0,25 bis 10 mol, besonders 0,3 bis 4 mol der Komponenten B) eingesetzt werden.

Die Herstellung der erfindungszugrundeliegenden Harze erfolgt in der Schmelze oder in Lösung eines geeigneten, organischen Lösemittels der Komponente A).

Hierzu wird in einer bevorzugten Ausführungsform I
zu der Lösung oder Schmelze der Komponente A) die Komponente B), in Anwesenheit eines geeigneten Katalysators, gegeben.
Je nach Reaktivität der Komponente B) wird die Temperatur der Umsetzung gewählt. Es haben sich Temperaturen zwischen 30 und 150 °C, bevorzugt zwischen 50 und 140 °C bewährt. Die Reaktion findet aber auch weniger bevorzugt bei Raumtemperatur statt.
Es hat sich als vorteilhaft erwiesen, 1 mol der Komponente A) - bezogen auf Mₙ - mit 0,2 bis 15 mol, bevorzugt 0,25 bis 10 mol, besonders 0,3 bis 4 mol der Isocyanat-Komponente B) zur Reaktion zu bringen.
Das gegebenenfalls enthaltene Lösemittel kann, falls gewünscht, nach beendeter Reaktion abgetrennt werden, wobei dann in der Regel ein Pulver des erfindungsgemäßen Produktes erhalten wird.

In einer bevorzugten Ausfühnmgsform II
wird zu der Lösung oder Schmelze der Komponente A) und dem hydroxyfunktionellen Polymer C) wie z. B. nicht hydrierte und/oder kernhydrierte Phenol-Aldehydharze, hydroxyfunktionelle, nicht hydrierte Keton-Aldehydharze, hydroxyfunktionelle Polyester und/oder Polyacrylate die Komponente B), in Anwesenheit eines geeigneten Katalysators, gegeben.
Je nach Reaktivität der Komponente B) wird die Temperatur der Umsetzung gewählt. Es haben sich Temperaturen zwischen 30 und 150 °C, bevorzugt zwischen 50 und 140 °C bewährt. Die Reaktion findet aber auch weniger bevorzugt bei Raumtemperatur statt.
Es hat sich als vorteilhaft erwiesen, 1 mol der Summe der Komponenten A) und C) - bezogen auf Mₙ- mit 0,2 bis 15 mol, bevorzugt 0,25 bis 10 mol, besonders 0,3 bis 4 mol der Isocyanat-Komponente B) zur Reaktion zu bringen.
Das gegebenenfalls enthaltene Lösemittel kann falls gewünscht nach beendeter Reaktion abgetrennt werden, wobei dann in der Regel ein Pulver des erfindungsgemäßen Produktes erhalten wird.

Die folgenden Beispiele sollen die gemachte Erfindung weiter erläutern aber nicht ihren Anwendungsbereich beschränken:

### Beispiel 1 zur Herstellung eines Reaktionsproduktes:

Die Synthese erfolgt, indem 400 g eines carbonylhydrierten Harzes aus Acetophenon und Formaldehyd (OHZ = 240 mg KOH/g (Acetanhydridmethode), Mn ~ 1000 g/mol (GPC gegen Polystyrol als Standard), Schmelzbereich 114 - 120 °C) mit 99,3 g H₁₂MDI (Vestanat EP H₁₂MDI, Degussa AG) in Anwesenheit von 0,15 % Coscat 83 (auf Harz, Caschem Catalysts) in 50%iger Verdünnung mit Ethylacetat in einem Dreihalskolben mit Rührer, Rückflusskühler und Thermofühler in Stickstoffatmosphäre solange bei 55 °C zur Reaktion gebracht werden, bis eine NCO-Zahl von kleiner 0,1 erreicht ist.
Es wird eine helle, klare Lösung mit einer dynamischen Viskosität von 2,6 Pa·s erhalten. Die Farbzahl nach Gardner der Lösung beträgt 0,4. Nach Lagerung bei 60 °C über 14 Tage beträgt die Farbzahl nach Gardner 0,5, was im Rahmen der Messgenauigkeit der Methode als unverändert zu bewerten ist und für eine hohe Vergilbungsbeständigkeit der Harzlösung spricht. Nach Abtrennen des Lösemittels wird ein farbloses Pulver erhalten, das einen Schmelzbereich zwischen 163 und 166 °C besitzt.

| Lack-Nr. | A | I |
|---|---|---|
| Nitrocellulose E 510 (65%ig in Isopropanol) | 19,3 | 13,5 |
| Ethylacetat | 23,2 | 19,5 |
| n-Butanol | 5,0 | 5,0 |
| Methoxypropanol | 2,5 | 2,5 |
| Vestinol AH | 2,5 | 2,5 |
| Harz aus Beispiel 1 | - | 7,5 |
| Summe | 52,5 | 50,5 |

Die Harzlösungen A und I wurden mit einem Rakel auf eine Glasplatte sowie auf unterschiedliche Kunststoffplatten und Metall aufgetragen. Die Nassschichtdicke betrug 100 µm. Die beschichteten Prüfplatten wurden nach Verdampfen der flüchtigen Bestandteile 14 Tage bei Normklima (23 °C, 50 % rel. Luftfeuchte) gelagert. Dann wurden Glanz und Haftung der Filme bestimmt.

### Filmeigenschaften :

| **Lack-Nr.** | **SD [µ]** | **Glanz 60°-Winkel (Substrat: Kiefernholz)** |
|---|---|---|
| A | 22 - 26 | 69 |
| I | 26-33 | 92 |

### Messerkratzhaftung auf unterschiedlichen Substraten:

| **Lack-Nr.** | **Glas** | **ABS** | **PE** | **PVC** | **PC** | **Metall** |
|---|---|---|---|---|---|---|
| A | 0 | 0 | 10 | 10 | 10 | 2 |
| I | 0 | 0 | 8 | 5 | 2 | 0 |

| | | | | | | |
|---|---|---|---|---|---|---|
| 0 = sehr gute Haftung; 10 = keine Haftung | | | | | | |

### Abkürzungen

ABS: Acrylnitril-Butadien-Styrol-Copolymer
PC : Polycarbonat
PE: Polyethylen
PVC: Polyvinylchlorid
SD : Schichtstärke

## Patentansprüche

1. Zinnfreie, hochschmelzende Reaktionsprodukte, enthaltend das Umsetzungsprodukt mit einem Schmelzbereich oberhalb von 140 °C von
A) mindestens einem carbonylhydrierten Keton-Aldehydharz und/oder hydrierten Ketonharz und/oder carbonylhydrierten und kernhydrierten Keton-Aldehydharz auf Basis von aromatischen Ketonen
mit
B) mindestens einem aromatischen, aliphatischen und/oder cycloaliphatischen Di- oder Polyisocyanat.

2. Zinnfreie, hochschmelzende Reaktionsprodukte, im Wesentlichen enthaltend das Umsetzungsprodukt mit einem Schmelzbereich oberhalb von 140 °C von
A) mindestens einem carbonylhydrierten Keton-Aldehydharz und/oder hydrierten Ketonharz und/oder carbonylhydrierten und kernhydrierten Keton-Aldehydharz auf Basis von aromatischen Ketonen
mit
B)mindestens einem aromatischen, aliphatischen und/oder cycloaliphatischen. Di- oder Polyisocyanat
und
C) mindestens einem weiteren hydroxyfunktionalisierten Polymer.

3. Reaktionsprodukte nach mindestens einem der vorherigen Ansprüche,
**dadurch gekennzeichnet,**
**dass** C-H-acide Ketone in der Komponente A) eingesetzt werden.

4. Reaktionsprodukte nach mindestens einem der vorherigen Ansprüche,
**dadurch gekennzeichnet,**
**dass** in den carbonylhydrierten Keton-Aldehydharzen der Komponente A), Ketone ausgewählt aus
Aceton, Acetophenon, kernsubstituierte Acetophenonderivate, wie Hydroxy-, Methyl-, Ethyl-, tert.-Butyl-, Cyclohexyl-Acetophenon, 4-tert.-Butylmethylketon, Methylethylketon, Heptanon-2, Pentanon-3, Methylisobutylketon, Propiophenon, Methylnaphthylketon, Cyclopentanon, Cyclododecanon, Mischungen aus 2,2,4- und 2,4,4-Trimethylcyclopentanon, Cycloheptanon und Cyclooctanon, Cyclohexanon und alle alkylsubstituierten Cyclohexanone mit einem oder mehreren Alkylresten, die insgesamt 1 bis 8 Kohlenstoffatome aufweisen, einzeln oder in Mischung eingesetzt werden.

5. Reaktionsprodukte nach mindestens einem der vorherigen Ansprüche,
**dadurch gekennzeichnet,**
**dass** in den carbonylhydrierten Keton-Aldehydharzen der Komponente A) alkylsubstituierte Cyclohexanone mit einem oder mehreren Alkylresten, die insgesamt 1 bis 8 Kohlenstoffatome aufweisen, einzeln oder in Mischung, als Ausgangsverbindungen eingesetzt werden.

6. Reaktionsprodukte nach Anspruch 5,
**dadurch gekennzeichnet,**
**dass** 4-tert.-Amylcyclohexanon, 2-sek.-Butylcyclohexanon, 2-tert-Butylcyclohexanon, 4-tert.-Butylcyclohexanon, 2-Methylcyclohexanon und/oder 3,3,5-Trimethylcyclohexanon eingesetzt werden.

7. Reaktionsprodukte nach mindestens einem der vorherigen Ansprüche,
**dadurch gekennzeichnet,**
**dass** als Aldehyd-Komponente der carbonylhydrierten Keton-Aldehydharze in Komponente A) Formaldehyd, Acetaldehyd, n-Butyraldehyd und/oder iso-Butyraldehyd, Valerianaldehyd, Dodecanal, allein oder in Mischungen, eingesetzt werden.

8. Reaktionsprodukte nach dem vorherigen Anspruch,
**dadurch gekennzeichnet,**
**dass** Formaldehyd und/oder para-Formaldehyd und/oder Trioxan eingesetzt werden.

9. Reaktionsprodukte nach mindestens einem der vorherigen Ansprüche,
**dadurch gekennzeichnet,**
**dass** Carbonylhydrierungsprodukte der Harze aus Acetophenon, 4-tert.-Butylmethylketon, Cyclohexanon, 4-tert.-Butylcyclohexanon, 3,3,5-Trimethylcyclohexanon, Heptanon, allein oder in Mischung, und Formaldehyd als Komponente A) eingesetzt werden.

10. Reaktionsprodukte nach mindestens einem der vorherigen Ansprüche,
**dadurch gekennzeichnet,**
**dass** die hydrierten Ketonharze der Komponente A), Ketone enthalten, ausgewählt aus Aceton, 4-tert.-Butylmethylketon, Methylethylketon, Heptanon-2, Pentanon-3, Methylisobutylketon, Propiophenon, Cyclopentanon, Cyclododecanon, Mischungen aus 2,2,4- und 2,4,4-Trimethylcyclopentanon, Cycloheptanon und Cyclooctanon, Cyclohexanon und alle alkylsubstituierten Cyclohexanone mit einem oder mehreren Alkylresten, die insgesamt 1 bis 8 Kohlenstoffatome aufweisen, einzeln oder in Mischung.

11. Reaktionsprodukte nach Anspruch 10,
**dadurch gekennzeichnet,**
**dass** Cyclohexanon, 4-tert.-Amylcyclohexanon, 2-sek.-Butylcyclohexanon, 2-tert.-Butylcyclohexanon, 4-tert.-Butylcyclohexanon, 2-Methylcyclohexanon und/oder 3,3,5-Trimethylcyclohexanon eingesetzt werden.

12. Reaktionsprodukte nach mindestens einem der vorherigen Ansprüche,
**dadurch gekennzeichnet,**
**dass** in den carbonyl- und kernhydrierten Keton-Aldehydharzen der Komponente A), ArylAlkyl-Ketone verwendet werden.

13. Reaktionsprodukte nach mindestens einem der vorherigen Ansprüche,
**dadurch gekennzeichnet,**
**dass** in den carbonyl- und kernhydrierten Keton-Aldehydharzen der Komponente A), Ketone ausgewählt aus
Acetophenon, kernsubstituierte Acetophenonderivate, wie Hydroxy-, Methyl-, Ethyl-, tert.-Butyl-, Cyclohexyl-Acetophenon, Methylnaphthylketon enthalten sind

14. Reaktionsprodukte nach mindestens einem der vorherigen Ansprüche,
**dadurch gekennzeichnet,**
**dass** in der Aldehyd-Komponente der carbonyl- und kemhydrierten Keton-Aldehydharze der Komponente A),
Formaldehyd, Acetaldehyd, n-Butyraldehyd und/oder iso-Butyraldehyd, Valerianaldehyd, Dodecanal, allein oder in Mischungen eingesetzt werden.

15. Reaktionsprodukte nach mindestens einem der vorherigen Ansprüche,
**dadurch gekennzeichnet,**
**dass** Diisocyanate als Komponente B) ausgewählt aus Cyclohexandiisocyanat, Methylcyclohexandiisocyanat, Ethylcyclohexandiisocyanat, Phenylendiisocyanat, Propylcyclohexandiisocyanat, Methyldiethylcyclohexandiisocyanat, Toluylendiisocyanat, Bis(isocyanatophenyl)methan, Propandiisocyanat, Butandiisocyanat, Pentandiisocyanat, Hexandiisocyanat, wie Hexamethylendiisocyanat (HDI) oder 1,5-Diisocyanato-2-methylpentan (MPDI), Heptandiisocyanat, Octandiisocyanat, Nonandiisocyanat, wie 1,6-Diisocyanato-2,4,4-trimethylhexan oder 1,6-Diisocyanato-2,2,4-trimethylhexan (TMDI), Nonantriisocyanat, wie 4-Isocyanatomethyl-1,8-octandiisocyanat (TIN), Dekandi- und triisocyanat, Undekandi- und -triisocyanat, Dodecandi- und -triisocyanate, Isophorondiisocyanat (IPDI), Bis(isocyanatomethylcyclohexyl)methan (H₁₂MDI), Isocyanatomethylmethylcyclohexylisocyanat, 2,5(2,6)-Bis(isocyanato-methyl)bicyclo-[2.2.1]heptan (NBDI), 1,3-Bis(isocyanatomethyl)cyclohexan (1,3-H₆-XDI) oder 1,4-Bis(isocyanatomethyl)cyclohexan (1,4-H₆-XDI) allein oder in Mischungen eingesetzt werden.

16. Reaktionsprodukte nach mindestens einem der vorherigen Ansprüche,
**dadurch gekennzeichnet,**
**dass** Polyisocyanate, hergestellt durch Dimerisierung, Trimerisierung, Allophanatisierung, Biuredsierung und/oder Urethanisieung einfacher Diisocyanate, als Komponente B) eingesetzt werden.

17. Reaktionsprodukte nach mindestens einem der vorherigen Ansprüche,
**dadurch gekennzeichnet,**
**dass** als Komponente B) Isocyanate auf Basis von IPDI, TMDI, H₁₂MDI und/oder HDI eingesetzt werden.

18. Reaktionsprodukte nach mindestens einem der vorherigen Ansprüche,
**dadurch gekennzeichnet,**
**dass** 1 mol der Komponente A) bezogen auf Mₙ, und 0,2 bis 15 mol, bevorzugt 0,25 bis 10 mol, besonders 0,3 bis 4 mol der Komponente B) eingesetzt werden.

19. Reaktionsprodukte nach mindestens einem der vorherigen Ansprüche,
**dadurch gekennzeichnet,**
**dass** der Schmelzbereich des Umsetzungsproduktes von A) und B) oberhalb von 140 °C, bevorzugt oberhalb von 145 °C, besonders bevorzugt oberhalb von 150 °C liegt.

20. Reaktionsprodukte nach mindestens einem der vorherigen Ansprüche,
**dadurch gekennzeichnet,**
**dass** als hydroxyfimktionalisierte Polymere C) Polyester, Polyacrylate, nicht hydrierte Keton-Aldehydharze und/oder nicht hydrierte und/oder kernhydrierte Phenol-Aldehydharze eingesetzt werden.

21. Reaktionsprodukte nach mindestens einem der vorherigen Ansprüche,
wobei Mischungen aus den Polymeren C) und der Komponente A) polymeranalog mit Komponente B) umgesetzt werden.

22. Verfahren zur Herstellung von Reaktionsprodukten, im Wesentlichen enthaltend das Umsetzungsprodukt mit einem Schmelzbereich oberhalb von 140 °C von
A) mindestens einem carbonylhydrierten Keton-Aldehydharz und/oder hydrierten Ketonharz und/oder carbonylhydrierten und kernhydrierten Keton-Aldehydharz auf Basis von aromatischen Ketonen
mit
B) mindestens einem aromatischen, aliphatischen und/oder cycloaliphatischen Di- oder Polyisocyanat
und gegebenenfalls
C) mindestens einem weiteren hydroxyfunktionalisierten Polymer,
durch Umsetzung von A) und B) und ggf. C), bei Temperaturen von 20 bis 150 °C in Gegenwart eines Katalysators, der kein Zinn enthält.

23. Verfahren zur Herstellung von Reaktionsprodukten nach Anspruch 22,
**dadurch gekennzeichnet,**
**dass** Verbindungen der Ansprüche 2 bis 21 eingesetzt werden.

24. Verfahren zur Herstellung von Reaktionsprodukten nach Anspruch 23,
**dadurch gekennzeichnet,**
**dass** als Katalysator Verbindungen eingesetzt werden, die Zirkonium, Eisen, Bismuth und/oder Aluminium enthalten.

25. Verfahren zur Herstellung von Reaktionsprodukten nach Anspruch 24,
**dadurch gekennzeichnet,**
**dass** als Katalysator Verbindungen eingesetzt werden, die Bismuth enthalten.

26. Verfahren zur Herstellung von Reaktionsprodukten nach einem der Ansprüche 22 bis 25,
**dadurch gekennzeichnet,**
**dass** der Katalysator stabilisiert ist.

27. Verfahren zur Herstellung von Reaktionsprodukten nach Anspruch 26,
**dadurch gekennzeichnet,**
**dass** der Katalysator mit Mono- und / oder Dicarbonsäuren stabilisiert ist.

28. Verfahren zur Herstellung von Reaktionsprodukten nach Anspruch 22,
**dadurch gekennzeichnet,**
**dass** als Katalysator organische Verbindungen eingesetzt werden.

29. Verfahren zur Herstellung von Reaktionsprodukten nach Anspruch 28,
**dadurch gekennzeichnet,**
**dass** als Katalysator tert. Amine eingesetzt werden.

30. Verfahren zur Herstellung von Reaktionsprodukten nach Anspruch 29.,
**dadurch gekennzeichnet,**
**dass** 1,4-Diazabicylo[2.2.2]octan (DABCO), 1,8-Diazabicyclo[5.4.0]undec-7-en (DBU), N,N-Dimethylcyclohexylamin (DMCA) und/oder 1,5-Diazabicyclo[2.3.0]non-5-en (DBN) eingesetzt werden.

31. Verfahren zur Herstellung von Reaktionsprodukten nach mindestens einem der Ansprüche 22 bis 30,
**dadurch gekennzeichnet,**
**dass** zu der Lösung oder Schmelze der Komponente A) die Komponente B), in Anwesenheit des zinnfreien Katalysators, gegeben wird.

32. Verfahren zur Herstellung von Reaktionsprodukten nach mindestens einem der Ansprüche 22 bis 31,
**dadurch gekennzeichnet,**
**dass** zu der Lösung oder Schmelze der Komponente A) und dem hydroxyfunktionellen Polymer C) die Komponente B), in Anwesenheit des zinnfreien Katalysators, zugegeben wird.

33. Verfahren zur Herstellung von hochschmelzenden Reaktionsprodukten nach mindestens einem der Ansprüche 22 bis 32,
**dadurch gekennzeichnet,**
**dass** bei Temperaturen zwischen 30 und 150 °C, bevorzugt zwischen 50 und 140 °C, umgesetzt wird.

34. Verwendung der Reaktionsprodukte nach mindestens einem der Ansprüche 1 bis 21 als Hauptkomponente, Basiskomponente oder Zusatzkomponente in Beschichtungsstoffen, Klebstoffen, Druckfarben und Tinten, Polituren, Lasuren, Pigmentpasten, Spachtelmassen, Kosmetikarlikeln und/oder Dicht- und Dämmstoffen.

35. Verwendung der Reaktionsprodukte nach mindestens einem der Ansprüche 1 bis 21 als Hauptkomponente, Basiskomponente oder Zusatzkomponente in Beschichtungsstoffen, Klebstoffen, Druckfarben und Tinten, Polituren, Lasuren, Pigmentpasten, Spachtelmassen, Kosmetikartikeln und/oder Dicht- und Dämmstoffen zur Verbesserung der Haftungseigenschaften und.der Härte.

## Claims

1. Tin-free high-melting reaction products comprising
the product of reaction, with a melting range of above 140°C, of
A) at least one carbonyl-hydrogenated ketone-aldehyde resin and/or hydrogenated ketone resin and/or carbonyl-hydrogenated and ring-hydrogenated ketone-aldehyde resin based on aromatic ketones
with
B) at least one aromatic, aliphatic and/or cycloaliphatic diisocyanate or polyisocyanate.

2. Tin-free high-melting reaction products essentially comprising
the product of reaction, with a melting range of above 140°C, of
A) at least one carbonyl-hydrogenated ketone-aldehyde resin and/or hydrogenated ketone resin and/or carbonyl-hydrogenated and ring-hydrogenated ketone-aldehyde resin based on aromatic ketones
with
B) at least one aromatic, aliphatic and/or cycloaliphatic diisocyanate or polyisocyanate
and
C) at least one further, hydroxy-functionalized polymer.

3. Reaction products according to either of the preceding claims, **characterized in that** C-H-acetic ketones are used in component A).

4. Reaction products according to at least one of the preceding claims, **characterized in that** use is made in the carbonyl-hydrogenated ketone-aldehyde resins of component A) of ketones selected from
acetone, acetophenone, ring-substituted acetophenone derivatives, such as hydroxy-, methyl-, ethyl-, tert-butyl- and cyclohexyl-acetophenone, 4-tert-butyl methyl ketone, methyl ethyl ketone, heptan-2-one, pentan-3-one, methyl isobutyl ketone, propiophenone, methyl naphthyl ketone, cyclopentanone, cyclododecanone, mixtures of 2,2,4- and 2,4,4-trimethylcyclopentanone, cycloheptanone and cyclooctanone, cyclohexanone and all alkyl-substituted cyclohexanones having one or more alkyl radicals, which contain in total from 1 to 8 carbon atoms, individually or in a mixture.

5. Reaction products according to at least one of the preceding claims, **characterized in that** use is made in the carbonyl-hydrogenated ketone-aldehyde resins of component A) of alkyl-substituted cyclohexanones having one or more alkyl radicals containing in total from 1 to 8 carbon atoms, individually or in a mixture, as starting compounds.

6. Reaction products according to Claim 5, **characterized in that** 4-tert-amylcyclohexanone, 2-sec-butylcyclohexanone, 2-tert-butylcyclohexanone, 4-tert-butylcyclohexanone, 2-methylcyclohexanone and/or 3,3,5-trimethylcyclohexanone are used.

7. Reaction products according to at least one of the preceding claims, **characterized in that** use is made as aldehyde component of the carbonyl-hydrogenated ketone-aldehyde resins in component A) of formaldehyde, acetaldehyde, n-butyraldehyde and/or isobutyraldehyde, valeraldehyde or dodecanal, alone or in mixtures.

8. Reaction products according to the preceding claim, **characterized in that** formaldehyde and/or para-formaldehyde and/or trioxane are used.

9. Reaction products according to at least one of the preceding claims, **characterized in that** carbonyl hydrogenation products of the resins formed from acetophenone, 4-tert-butyl methyl ketone, cyclohexanone, 4-tert-butylcyclohexanone, 3,3,5-trimethylcyclohexanone or heptanone, alone or in a mixture, and formaldehyde are used as component A).

10. Reaction products according to at least one of the preceding claims, **characterized in that** the hydrogenated ketone resins of component A) comprise ketones selected from acetone, 4-tert-butyl methyl ketone, methyl ethyl ketone, heptan-2-one, pentan-3-one, methyl isobutyl ketone, propiophenone, cyclopentanone, cyclododecanone, mixtures of 2,2,4- and 2,4,4-trimethylcyclopentanone, cycloheptanone and cyclooctanone, cyclohexanone and all alkyl-substituted cyclohexanones having one or more alkyl radicals, which contain in total from 1 to 8 carbon atoms, individually or in a mixture.

11. Reaction products according to Claim 10, **characterized in that** cyclohexanone, 4-tert-amylcyclohexanone, 2-sec-butylcyclohexanone, 2-tert-butylcyclohexanone, 4-tert-butylcyclohexanone, 2-methylcyclohexanone and/or 3,3,5-trimethylcyclohexanone are used.

12. Reaction products according to at least one of the preceding claims, **characterized in that** aryl alkyl ketones are used in the carbonyl-hydrogenated and ring-hydrogenated ketone-aldehyde resins of component A).

13. Reaction products according to at least one of the preceding claims, **characterized in that** the carbonyl-hydrogenated and ring-hydrogenated ketone-aldehyde resins of component A) comprise ketones selected from acetophenone, ring-substituted acetophenone derivatives, such as hydroxy-, methyl-, ethyl-, tert-butyl- and cyclohexyl-acetophenone, and methyl naphthyl ketone.

14. Reaction products according to at least one of the preceding claims, **characterized in that** formaldehyde, acetaldehyde, n-butyraldehyde and/or isobutyraldehyde, valeraldehyde or dodecanal, alone or in mixtures, are used in the aldehyde component of the carbonyl-hydrogenated and ring-hydrogenated ketone-aldehyde resins of component A).

15. Reaction products according to at least one of the preceding claims, **characterized in that** use is made as component B) of diisocyanates selected from cyclohexane diisocyanate, methylcyclohexane diisocyanate, ethylcyclohexane diisocyanate, phenylene diisocyanate, propylcyclohexane diisocyanate, methyldiethylcyclohexane diisocyanate, tolylene diisocyanate, bis(isocyanatophenyl)methane, propane diisocyanate, butane diisocyanate, pentane diisocyanate, hexane diisocyanate, such as hexamethylene diisocyanate (HDI) or 1,5-diisocyanato-2-methylpentane (MPDI), heptane diisocyanate, octane diisocyanate, nonane diisocyanate, such as 1,6-diisocyanato-2,4,4-trimethylhexane or 1,6-diisocyanato-2,2,4-trimethylhexane (TMDI), nonane triisocyanate, such as 4-isocyanatomethyl-1,8-octane diisocyanate (TIN), decane diisocyanate and triisocyanate, undecane diisocyanate and triisocyanate, dodecane diisocyanates and triisocyanates, isophorone diisocyanate (IPDI), bis(isocyanatomethylcyclohexyl)methane (H₁₂MDI), isocyanatomethyl methylcyclohexyl isocyanate, 2,5(2,6)-bis(isocyanatomethyl)bicyclo[2.2.1]heptane (NBDI), 1,3-bis(isocyanatomethyl)cyclohexane (1,3-H₆-XDI) or 1,4-bis(isocyanatomethyl)-cyclohexane (1,4-H₆-XDI), alone or in mixtures.

16. Reaction products according to at least one of the preceding claims, **characterized in that** polyisocyanates prepared by dimerization, trimerization, allophanatization, biuretization and/or urethanization of simple diisocyanates are used as component B).

17. Reaction products according to at least one of the preceding claims, **characterized in that** isocyanates based on IPDI, TMDI, H₁₂MDI and/or HDI are used as component B).

18. Reaction products according to at least one of the preceding claims, **characterized in that** 1 mol of component A), based on Mₙ, and from 0.2 to 15 mol, preferably from 0.25 to 10 mol, in particular from 0.3 to 4 mol of component B) are used.

19. Reaction products according to at least one of the preceding claims, **characterized in that** the melting range of the reaction product of A) and B) is above 140°C, preferably above 145°C, more preferably above 150°C.

20. Reaction products according to at least one of the preceding claims, **characterized in that** polyesters, polyacrylates, nonhydrogenated ketone-aldehyde resins and/or nonhydrogenated and/or ring-hydrogenated phenyl-aldehyde resins are used as hydroxy-functionalized polymers C).

21. Reaction products according to at least one of the preceding claims, where mixtures of the polymers C) and component A) are subjected to polymer-analogous reaction with component B).

22. Process for preparing reaction products essentially comprising the product of reaction, with a melting range of above 140°C, of
A) at least one carbonyl-hydrogenated ketone-aldehyde resin and/or hydrogenated ketone resin and/or carbonyl-hydrogenated and ring-hydrogenated ketone-aldehyde resin based on aromatic ketones
with
B) at least one aromatic, aliphatic and/or cycloaliphatic diisocyanate or polyisocyanate
and if desired,
C) at least one further, hydroxy-functionalized polymer
by reacting A) and B) and, where used, C) at temperatures from 20 to 150°C in the presence of a catalyst which contains no tin.

23. Process for preparing reaction products according to Claim 22, **characterized in that** compounds of Claims 2 to 21 are used.

24. Process for preparing reaction products according to Claim 23, **characterized in that** compounds comprising zirconium, iron, bismuth and/or aluminum are used as catalyst.

25. Process for preparing reaction products according to Claim 24, **characterized in that** compounds comprising bismuth are used as catalyst.

26. Process for preparing reaction products according to any one of Claims 22 to 25, **characterized in that** the catalyst is stabilized.

27. Process for preparing reaction products according to Claim 26, **characterized in that** the catalyst is stabilized with monocarboxylic and/or dicarboxylic acids.

28. Process for preparing reaction products according to Claim 22, **characterized in that** organic compounds are used as catalyst.

29. Process for preparing reaction products according to Claim 28, **characterized in that** tertiary amines are used as catalyst.

30. Process for preparing reaction products according to Claim 29, **characterized in that** 1,4-diazabicyclo[2.2.2]octane (DABCO), 1,8-diazabicyclo[5.4.0]undec-7-ene (DBU), N,N-dimethylcyclohexylamine (DMCA) and/or 1,5-diazabicyclo[2.3.0]non-5-ene (DBN) are used.

31. Process for preparing reaction products according to at least one of Claims 22 to 30, **characterized in that** component B) is added in the presence of the tin-free catalyst to the solution or melt of component A).

32. Process for preparing reaction products according to at least one of Claims 22 to 31, **characterized in that** component B) is added in the presence of the tin-free catalyst to the solution or melt of component A) and the hydroxy-functional polymer C).

33. Process for preparing high-melting reaction products according to at least one of Claims 22 to 32, **characterized in that** reaction is carried out at temperatures between 30 and 150°C, preferably between 50 and 140°C.

34. Use of the reaction products according to at least one of Claims 1 to 21 as a main component, base component or additive component in a coating material, adhesive, ink, polish, glaze, stain, pigment paste, filling compound, cosmetics article, sealant and/or insulant.

35. Use of the reaction products according to at least one of Claims 1 to 21 as a main component, base component or additive component in a coating material, adhesive, ink, polish, glaze, stain, pigment paste, filling compound, cosmetics article, sealant and/or insulant for the purpose of improving the adhesion properties and hardness.

## Revendications

1. Produits de réaction exempts d'étain, à point de fusion élevé, comprenant le produit de réaction, présentant une plage de fusion supérieure à 140°C, de
A) au moins une résine de cétone-aldéhyde hydrogénée sur le groupe carbonyle et/ou résine de cétone hydrogénée et/ou résine de cétone-aldéhyde hydrogénée sur le groupe carbonyle et hydrogénée sur le noyau, à base de cétones aromatiques
avec
B) au moins un diisocyanate ou polyisocyanate aromatique, aliphatique et/ou cycloaliphatique.

2. Produits de réaction exempts d'étain, à point de fusion élevé, comprenant essentiellement le produit de réaction, présentant une plage de fusion supérieure à 140°C, de
A) au moins une résine de cétone-aldéhyde hydrogénée sur le groupe carbonyle et/ou résine de cétone hydrogénée et/ou résine de cétone-aldéhyde hydrogénée sur le groupe carbonyle et hydrogénée sur le noyau, à base de cétones aromatiques
avec
B) au moins un diisocyanate ou polyisocyanate aromatique, aliphatique et/ou cycloaliphatique,
et
C) au moins un polymère supplémentaire à fonction hydroxy.

3. Produits de réaction selon au moins l'une des revendications précédentes, **caractérisés en ce que** des cétones C-H-acides sont utilisées dans le composant A).

4. Produits de réaction selon au moins l'une des revendications précédentes, **caractérisés en ce que** dans les résines de cétone-aldéhyde hydrogénées sur le groupe carbonyle du composant A), on utilise des cétones choisies parmi
l'acétone, l'acétophénone, des dérivés d'acétophénone substitués sur le noyau, tels que l'hydroxyacétophénone, la méthylacétophénone, l'éthylacétophénone, la tert-butylacétophénone et la cyclohexylacétophénone, la 4-tert-butylméthylcétone, la méthyléthylcétone, la 2-heptanone, la 3-pentanone, la méthylisobutylcétone, la propiophénone, la méthylnaphtylcétone, la cyclopentanone, la cyclododécanone, des mélanges de 2,2,4-triméthylcyclopentanone et de 2,4,4-triméthylcyclopentanone, la cycloheptanone et la cyclo-octanone, la cyclohexanone et toutes les cyclohexanones alkyl-substituées renfermant un ou plusieurs radicaux alkyle, qui renferment au total de 1 à 8 atomes de carbone, individuellement ou en mélange.

5. Produits de réaction selon au moins l'une des revendications précédentes, **caractérisés en ce que** dans les résines de cétone-aldéhyde hydrogénées sur le groupe carbonyle du composant A), on utilise des cyclohexanones alkyl-substituées renfermant un ou plusieurs radicaux alkyle, qui renferment au total de 1 à 8 atomes de carbone, individuellement ou en mélange, en tant que composés de départ.

6. Produits de réaction selon la revendication 5, **caractérisés en ce que** l'on utilise de la 4-tert-amylcyclohexanone, de la 2-sec-butylcyclohexanone, de la 2-tert-butylcyclohexanone, de la 4-tert-butylcyclohexanone, de la 2-méthylcyclohexanone et/ou de la 3,3,5-triméthylcyclohexanone.

7. Produits de réaction selon au moins l'une des revendications précédentes, **caractérisés en ce que** l'on utilise, en tant que composant aldéhyde des résines de cétone-aldéhyde hydrogénées sur le groupe carbonyle dans le composant A), du formaldéhyde, de l'acétaldéhyde, du n-butyraldéhyde et/ou de l'isobutyraldéhyde, du valéraldéhyde, du dodécanal, seuls ou dans des mélanges.

8. Produits de réaction selon la revendication précédente, **caractérisés en ce que** l'on utilise du formaldéhyde et/ou du para-formaldéhyde et/ou du trioxane.

9. Produits de réaction selon au moins l'une des revendications précédentes, **caractérisés en ce que** l'on utilise des produits d'hydrogénation du groupe carbonyle des résines à base d'acétophénone, de 4-tert-butylméthylcétone, de cyclohexanone, de 4-tert-butylcyclohexanone, de 3,3,5-triméthylcyclohexanone, d'heptanone, seuls ou en mélange, et du formaldéhyde en tant que composant A).

10. Produits de réaction selon au moins l'une des revendications précédentes, **caractérisés en ce que** les résines de cétone hydrogénées du composant A) comprennent des cétones choisies parmi l'acétone, la 4-tert-butylméthylcétone, la méthyléthylcétone, la 2-heptanone, la 3-pentanone, la méthylisobutylcétone, la propiophénone, la cyclopentanone, la cyclododécanone, des mélanges de 2,2,4-triméthylcyclopentanone et de 2,4,4-triméthylcyclopentanone, la cycloheptanone et la cyclo-octanone, la cyclohexanone et toutes les cyclohexanones alkyl-substituées renfermant un ou plusieurs radicaux alkyle, qui renferment au total de 1 à 8 atomes de carbone, individuellement ou en mélange.

11. Produits de réaction selon la revendication 10, **caractérisés en ce que** l'on utilise de la cyclohexanone, de la 4-tert-amylcyclohexanone, de la 2-sec-butylcyclohexanone, de la 2-tert-butylcyclohexanone, de la 4-tert-butylcyclohexanone, de la 2-méthylcyclohexanone et/ou de la 3,3,5-triméthylcyclohexanone.

12. Produits de réaction selon au moins l'une des revendications précédentes, **caractérisés en ce que** dans les résines de cétone-aldéhyde hydrogénées sur le groupe carbonyle et sur le noyau du composant A), on utilise des arylalkylcétones.

13. Produits de réaction selon au moins l'une des revendications précédentes, **caractérisés en ce que** dans les résines de cétone-aldéhyde hydrogénées sur le groupe carbonyle et sur le noyau du composant A), des cétones choisies parmi acétophénone, des dérivés acétophénone substitués sur le noyau, tels que l'hydroxyacétophénone, la méthylacétophénone, l'éthylacétophénone, la tert-butylacétophénone et la cyclohexylacétophenone, et la méthylnaphtylcétone, sont présentes.

14. Produits de réaction selon au moins l'une des revendications précédentes, **caractérisés en ce que** dans le composant aldéhyde des résines de cétone-aldéhyde hydrogénées sur le groupe carbonyle et sur le noyau du composant A), on utilise du formaldéhyde, de l'acétaldéhyde, du n-butyraldéhyde et/ou de l'isobutyraldéhyde, du valéraldéhyde, du dodécanal, seuls ou dans des mélanges.

15. Produits de réaction selon au moins l'une des revendications précédentes, **caractérisés en ce que** l'on utilise, en tant que composant B), des diisocyanates choisis parmi le diisocyanate de cyclohexane, le diisocyanate de méthylcyclohexane, le diisocyanate d'éthylcyclohexane, le diisocyanate de phénylène, le diisocyanate de propylcyclohexane, le diisocyanate de méthyldiéthylcyclohexane, le diisocyanate de toluylène, le bis(isocyanatophényl)méthane, le diisocyanate de propane, le diisocyanate de butane, le diisocyanate de pentane, le diisocyanate d'hexane, tel que le diisocyanate d'hexaméthylène (HDI) ou le 1,5-diisocyanato-2-méthylpentane (MPDI), le diisocyanate d'heptane, le diisocyanate d'octane, le diisocyanate de nonane, tel que le 1,6-diisocyanato-2,4,4-triméthylhexane ou le 1,6-diisocyanato-2,2,4-triméthylhexane (TMDI), le triisocyanate de nonane, tel que le 4-isocyanatométhyl-1,8-octanediisocyanate (TIN), le diisocyanate de décane et le triisocyanate de décane, le diisocyanate d'indécane et le triisocyanate d'indécane, des diisocyanates de dodécane et des triisocyanates de dodécane, le diisocyanate d'isophorone (IPDI), le bis(isocyanatométhylcyclohexyl)methane (H₁₂MDI), l'isocyanate d'isocyanatométhylméthylcyclohexyle, le 2,5-(2,6)-bis(isocyanatométhyl)bicyclo[2.2.1]heptan e (NBDI), le 1,3-bis(isocyanatométhyl)cyclohexane (1,3-H₆-XDI) ou le 1,4-bis(isocyanatométhyl)cyclohexane (1,4-H₆-XDI), seuls ou dans des mélanges.

16. Produits de réaction selon au moins l'une des revendications précédentes, **caractérisés en ce que** l'on utilise des polyisocyanates préparés par dimérisation, trimérisation, allophanatisation, biurétisation et/ou uréthanisation de diisocyanates simples, en tant que composant B).

17. Produits de réaction selon au moins l'une des revendications précédentes, **caractérisés en ce que** l'on utilise, en tant que composant B), des isocyanates à base d'IPDI, de TMDI, de H₁₂MDI et/ou de HDI.

18. Produits de réaction selon au moins l'une des revendications précédentes, **caractérisés en ce que** l'on utilise 1 mol du composant A), par rapport à Mₙ, et de 0,2 à 15 mol, de préférence de 0,25 à 10 mol, en particulier de 0,3 à 4 mol du composant B).

19. Produits de réaction selon au moins l'une des revendications précédentes, **caractérisés en ce que** la plage de fusion du produit de réaction de A) et de B) est supérieure à 140°C, de préférence supérieure à 145°C, particulièrement préférablement supérieure à 150°C.

20. Produits de réaction selon au moins l'une des revendications précédentes, **caractérisés en ce que** l'on utilise, en tant que polymères à fonction hydroxy C), des polyesters, des polyacrylates, des résines de cétone-aldéhyde non hydrogénées et/ou des résines de phénol-aldéhyde non hydrogénées et/ou hydrogénées sur le noyau.

21. Produits de réaction selon au moins l'une des revendications précédentes, des mélanges des polymères C) et du composant A) étant mis à réagir avec le composant B) de façon analogue à un polymère.

22. Procédé de préparation de produits de réaction, comprenant essentiellement le produit de réaction, présentant une plage de fusion supérieure à 140°C, de
A) au moins une résine de cétone-aldéhyde hydrogénée sur le groupe carbonyle et/ou résine de cétone hydrogénée et/ou résine de cétone-aldéhyde hydrogénée sur le groupe carbonyle et hydrogénée sur le noyau, à base de cétones aromatiques
avec
B) au moins un diisocyanate ou polyisocyanate aromatique, aliphatique et/ou cycloaliphatique,
et éventuellement
C) au moins un polymère supplémentaire à fonction hydroxy,
par la réaction de A) et de B) et éventuellement de C), à des températures de 20 à 150°C en présence d'un catalyseur qui ne renferme pas d'étain.

23. Procédé de préparation de produits de réaction selon la revendication 22, **caractérisé en ce que** l'on utilise des composés des revendications 2 à 21.

24. Procédé de préparation de produits de réaction selon la revendication 23, **caractérisé en ce que** l'on utilise, en tant que catalyseur, des composés qui renferment du zirconium, du fer, du bismuth et/ou de l'aluminium.

25. Procédé de préparation de produits de réaction selon la revendication 24, **caractérisé en ce que** l'on utilise, en tant que catalyseur, des composés qui renferment du bismuth.

26. Procédé de préparation de produits de réaction selon l'une quelconque des revendications 22 à 25, **caractérisé en ce que** le catalyseur est stabilisé.

27. Procédé de préparation de produits de réaction selon la revendication 26, **caractérisé en ce que** le catalyseur est stabilisé avec des acides monocarboxyliques et/ou des acides dicarboxyliques.

28. Procédé de préparation de produits de réaction selon la revendication 22, **caractérisé en ce que** l'on utilise des composés organiques en tant que catalyseur.

29. Procédé de préparation de produits de réaction selon la revendication 28, **caractérisé en ce que** l'on utilise des amines tertiaires en tant que catalyseur.

30. Procédé de préparation de produits de réaction selon la revendication 29, **caractérisé en ce que** l'on utilise du 1,4-diazabicyclo[2.2.2]octane (DABCO), du 1,8-diazabicyclo[5.4.0]undéc-7-ène (DBU), de la N,N-diméthylcyclohexylamine (DMCA) et/ou du 1,5-diazabicyclo[2.3.0]non-5-ène (DBN).

31. Procédé de préparation de produits de réaction selon au moins l'une des revendications 22 à 30, **caractérisé en ce que** le composant B) est ajouté à la solution ou à la masse fondue du composant A), en présence du catalyseur exempt d'étain.

32. Procédé de préparation de produits de réaction selon au moins l'une des revendications 22 à 31, **caractérisé en ce que** le composant B) est ajouté à la solution ou à la masse fondue du composant A) et du polymère à fonction hydroxy C), en présence du catalyseur exempt d'étain.

33. Procédé de préparation de produits de réaction à point de fusion élevé selon au moins l'une des revendications 22 à 32, **caractérisé en ce que** la réaction est effectuée à des températures comprises entre 30 et 150°C, de préférence entre 50 et 140°C.

34. Utilisation des produits de réaction selon au moins l'une des revendications 1 à 21 en tant que composant principal, composant de base ou composant additif dans des matières de revêtement, des adhésifs, des couleurs d'imprimerie et des encres, des vernis, des glacies, des pâtes pigmentaires, des compositions de mastic, des articles cosmétiques et/ou des matières d'étanchéité et d'isolation.

35. Utilisation des produits de réaction selon au moins l'une des revendications 1 à 21 en tant que composant principal, composant de base ou composant additif dans des matières de revêtement, des adhésifs, des couleurs d'imprimerie et des encres, des vernis, des glacies, des pâtes pigmentaires, des compositions de mastic, des articles cosmétiques et/ou des matières d'étanchéité et d'isolation pour l'amélioration des propriétés d'adhésion et de la dureté.
